# EUROPEAN PATENT SPECIFICATION

(11) **EP 1 328 027 B1**
(45) Date of publication and mention of the grant of the patent: **28.03.2007**
(21) Application number: 03250021.7
(22) Date of filing: 06.01.2003
(51) Int. Cl.: H01L 43/08, H01F 10/32, G11B 5/39

(54) **Magnetoresistive element**
Magnetoresistives Element
Elément magnétorésistif

(30) Priority: 10.01.2002 JP 2002003460
(43) Date of publication of application: 16.07.2003
(73) Proprietor: FUJITSU LIMITED, Kawasaki-shi, Kanagawa 211-8588 (JP)
(72) Inventor: Seyama, Yoshihiko, c/o Fujitsu Limited, Kawasaki-shi, Kanagawa 211-8588 (JP); Nagasaka, Keiichi, c/o Fujitsu Limited, Kawasaki-shi, Kanagawa 211-8588 (JP); Oshima, Hirotaka, c/o Fujitsu Limited, Kawasaki-shi, Kanagawa 211-8588 (JP); Shimizu, Yutaka, c/o Fujitsu Limited, Kawasaki-shi, Kanagawa 211-8588 (JP); Tanaka, Atsushi, c/o Fujitsu Limited, Kawasaki-shi, Kanagawa 211-8588 (JP)
(74) Representative: Fenlon, Christine Lesley

(56) References cited:
- EP-A- 0 910 092
- EP-A- 1 143 537
- FR-A- 2 774 774
- US-A- 5 986 858

## Description

The present invention relates to a magnetoresistive element utilized to read magnetic information out of a magnetic recording medium drive or device such as a hard disk drive (HDD), for example. In particular, the present invention relates to a current-perpendicular-to-the-plane (CPP) structure magnetoresistive element comprising a free magnetic layer, a pinned magnetic layer and an electrically-conductive non-magnetic intermediate layer. A sensing current is designed to comprise a current component perpendicular to the surface of the-magnetoresistive film in the CPP structure magnetoresistive element.

A CPP structure magnetoresistive element comprising a so-called multilayered giant magnetoresistive (GMR) film has been previously-proposed. The CPP structure magnetoresistive element of this type provides a larger variation in the electrical resistance as the number of the magnetic layers increases. As conventionally known, a larger variation in the electrical resistance leads to an accurate reading of binary magnetic information with a sensing electric current of a smaller current value. In particular, a larger variation in the electrical resistance can be maintained in the CPP structure magnetoresistive element of the type irrespective of a reduced size of the element, or the core width, for example. The CPP structure magnetoresistive element is expected to contribute to an increased recording density.

Although the increased number of the magnetic layers leads to reduction in the core width resulting in an improvement in the track density, it inevitably hinders improvement in the linear density, namely, reduction in the bit length. Accordingly, the recording density cannot be improved as expected. In addition, it is difficult to appropriately control the magnetic domain of the free ferromagnetic layer as well as to suppress hysteresis.

A CPP structure magnetoresistive element comprising a so-called spin valve film has been proposed. The spin valve film is in fact widely utilized in a current-in-the-plane (CIP) structure magnetoresistive element allowing a sensing current to flow in parallel with the surface of the magnetoresistive film. Specifically, the spin valve film is mostly prevented from suffering from the control of the magnetic domain in the free ferromagnetic layer as well as the suppression of the hysteresis. However, a dramatic improvement in the variation of the electrical resistance cannot be expected in the CPP structure magnetoresistive element comprising the spin valve film.

Accordingly, it is desirable to provide a CPP structure magnetoresistive element capable of establishing a larger variation in electrical resistance even with a decreased number of layers.

According to the present invention, there is provided a current-perpendicular-to-the-plane structure magnetoresistive element comprising:
a free magnetic layer; a pinned magnetic layer; and a non-magnetic intermediate layer interposed between the free magnetic layer and pinned magnetic layer; characterized in that: the non-magnetic intermediate layer is made of an electrically-conductive material and has a surface defining a boundary of the non-magnetic intermediate layer; and insulating material exists on the boundary in a dispersed manner.

When a CPP structure magnetoresistive element embodying the present invention is placed within a magnetic field leaked out of a magnetic recording medium, the magnetization of the free magnetic layer is allowed to rotate in response to the inversion of the magnetic polarity of the magnetic field. The rotation of the magnetization in the free layer induces a larger variation in the electrical resistance of the CPP structure magnetoresistive element. The voltage of a sensing electric current penetrating through the free magnetic layer, the non-magnetic intermediate layer and the pinned magnetic layer varies in response to the variation in the electrical resistance. The variation in the voltage can be utilized to detect binary magnetic data.

In an embodiment of the present invention, the insulating material is supposed to reduce the sectional area of the path for the sensing electric current. The CPP structure magnetoresistive element realizes a larger variation in the electrical resistance in response to the rotation of the magnetization in the free magnetic layer. A sensing electric current of a smaller level is still employed to obtain a sufficient variation in the voltage. Accordingly, a CPP structure magnetoresistive element embodying the present invention greatly contributes to a further improvement in the recording density and reduction in the electric consumption.

US 5, 986, 858, FR 2,774,774 and EP-A-0780912 (closest prior art) disclose a current-perpendicular-to-the-plane structure magnetoresistive element comprising a free magnetic layer and a pinned magnetic layer. However, none of these documents discloses or suggests that an insulating material should exist in only a dispersed manner over a boundary defined on an electrically-conductive non-magnetic intermediate layer interposed between the free and pinned magnetic layers.

The insulating material in an embodiment of the present invention may be a metal oxide, a metal nitride, or the like. The metal oxide or nitride may include magnetic metal atoms. It has been observed that the insulating material including the magnetic metal atoms remarkably contributes to an increased variation in the resistance. The magnetic metal atoms may include at least one of Fe, Co and Ni. For example, the insulating material may be an oxide or a nitride of CoFe alloy. If CoFe alloy is exposed to oxygen gas, oxygen plasma, oxygen radical, and the like, on an electrically-conductive layer, the oxide of the CoFe alloy can easily be obtained. Likewise, if CoFe alloy is exposed to nitrogen gas on an electrically-conductive layer, the nitride of the CoFe alloy can easily be obtained.

The metal oxide or nitride may be mixed with a metallic material on the boundary. The metallic material may comprise a magnetic metallic material, for example. When the oxide or nitride of the CoFe alloy exists on the boundary, the metallic material may be CoFe alloy. The mixture of the insulating material and the metallic material is supposed to greatly contribute to an increased variation in the resistance.

Reference will now be made, by way of example, to the accompanying drawings, in which:
Fig. 1 is a plan view schematically illustrating the interior structure of a hard disk drive (HDD);
Fig. 2 is an enlarged perspective view schematically illustrating the structure of a flying head slider according to a specific example;
Fig. 3 is a front view schematically illustrating a read/write electromagnetic transducer observed at an air bearing surface;
Fig. 4 is an enlarged front view schematically illustrating the structure of a magnetoresistive (MR) layered piece according to a first embodiment of the present invention;
Fig. 5 schematically illustrates a path of an electric current penetrating through the MR layered piece;
Fig. 6 is an enlarged partial vertical sectional view of a wafer schematically illustrating the MR layered piece formed on the wafer;
Fig. 7 is an enlarged partial vertical sectional view of the wafer schematically illustrating the process of forming domain control stripe layers;
Fig. 8 is an enlarged partial vertical sectional view of the wafer schematically illustrating the process of forming an overlaid insulation layer;
Fig. 9 is an enlarged partial vertical sectional view of the wafer schematically illustrating a photoresist film defining a void corresponding to the contour of a terminal bump of an upper electrode;
Fig. 10 is an enlarged partial vertical sectional view of the wafer schematically illustrating the process of forming a contact hole;
Fig. 11 is an enlarged partial vertical sectional view of the wafer schematically illustrating the process of forming the upper electrode;
Fig. 12 is an enlarged partial vertical sectional view of the wafer schematically illustrating the process of forming a layered material film scraped into the MR layered piece;
Fig. 13 is an enlarged partial vertical sectional view of the wafer schematically illustrating the process of forming the layered material film;
Fig. 14 is a graph illustrating the relationship between the thickness of the CoFeB layer exposed to oxygen gas and the magnitude as well as the variation in the electrical resistance;
Fig. 15 is a graph illustrating the relationship between the thickness of the CoFeB layer exposed to oxygen gas and the magnetoresistive (MR) ratio as well as the variation in the voltage of the applied electric current;
Fig. 16 is a graph illustrating the relationship between the quantity of the Fe composition within the CoFeB layer exposed to oxygen gas and the magnitude as well as the variation in the electrical resistance;
Fig. 17 is a graph illustrating the relationship between the quantity of the Fe composition within the CoFeB layer exposed to oxygen gas and the MR ratio as well as the variation in the voltage of the applied electric current;
Fig. 18 is an enlarged front view schematically illustrating the structure of a MR layered piece according to a second embodiment of the present invention;
Fig. 19 is an enlarged front view schematically illustrating the structure of a MR layered piece according to a third embodiment of the present invention;
Fig. 20 is a graph illustrating the relationship between the thickness of a CoFeB layer exposed to oxygen gas and the magnitude as well as the variation in the electrical resistance; and
Fig. 21 is a graph illustrating the relationship between the thickness of the CoFeB layer exposed to oxygen gas and the MR ratio as well as the variation in the voltage of the applied electric current.

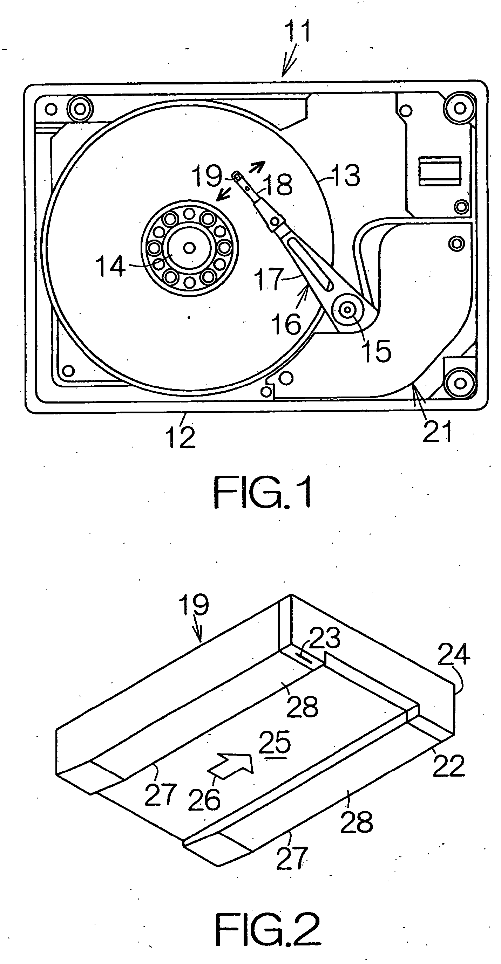

Fig. 1 schematically illustrates the interior structure of a hard disk drive (HDD) 11 as an example of a magnetic recording medium drive or storage device. The HDD 11 includes a box-shaped primary enclosure 12 defining an inner space of a flat parallelepiped, for example. At least one recording medium or magnetic recording disk 13 is accommodated in the inner space within the primary enclosure 12. The magnetic recording disk 13 is mounted on a driving shaft of a spindle motor 14. The spindle motor 14 is allowed to drive the magnetic recording disk 13 for rotation at a higher revolution rate such as 7,200rpm or 10,000rpm, for example. A cover, not shown, is coupled to the primary enclosure 12 so as to define the closed inner space between the primary enclosure 12 and itself.

A carriage 16 is also accommodated in the inner space of the primary enclosure 12 for swinging movement about a vertical support shaft 15. The carriage 16 includes a rigid swinging arm 17 extending in the horizontal direction from the vertical support shaft 15, and an elastic head suspension 18 fixed to the tip end of the swinging arm 17 so as to extend forward from the swinging arm 17. As conventionally known, a flying head slider 19 is cantilevered at the tip end of the head suspension 18 through a gimbal spring, not shown. The head suspension 18 serves to urge the flying head slider 19 toward the surface of the magnetic recording disk 13. When the magnetic recording disk 13 rotates, the flying head slider 19 is allowed to receive an airflow generated along the rotating magnetic recording disk 13. The airflow serves to generate a lift on the flying head slider 19. The flying head slider 19 is thus allowed to keep flying above the surface of the magnetic recording disk 13 during rotation of the magnetic recording disk 13 at a higher stability established by the balance between the lift and the urging force of the head suspension 18.

When the carriage 16 is driven to swing about the support shaft 15 during flight of the flying head slider 19, the flying head slider 19 is allowed to cross the recording tracks defined on the magnetic recording disk 13 in the radial direction of the magnetic recording disk 13. This radial movement serves to position the flying head slider 19 right above a target recording track on the magnetic recording disk 13. In this case, an electromagnetic actuator 21 such as a voice coil motor (VCM) can be employed to realize the swinging movement of the carriage 16, for example. As conventionally known, in the case where two or more magnetic recording disks 13 are incorporated within the inner space of the primary enclosure 12, a pair of the elastic head suspensions 18 are mounted on a single common swinging arm 17 between the adjacent magnetic recording disks 13.

Fig. 2 illustrates a specific example of the flying head slider 19. The flying head slider 19 of this type includes a slider body 22 made of Al₂O₃-TiC in the form of a flat parallelepiped, and a head protection layer 24 formed to spread over the trailing or outflow end of the slider body 22. The head protection layer 24 may be made of Al₂O₃. A read/write electromagnetic transducer 23 is embedded in the head protection layer 24. A medium-opposed surface or bottom surface 25 is defined continuously over the slider body 22 and the head protection layer 24 so as to face the surface of the magnetic recording disk 13 at a distance. The bottom surface 25 is designed to receive an airflow 26 generated along the surface of the rotating magnetic recording disk 13.

A pair of rails 27 are formed to extend over the bottom surface 25 from the leading or upstream end toward the trailing or downstream end. The individual rail 27 is designed to define an air bearing surface (ABS) 28 at its top surface. In particular, the airflow 26 generates the aforementioned lift at the respective air bearing surfaces 28. The read/write electromagnetic transducer 23 embedded in the head protection layer 24 is exposed at the air bearing surface 28 as described later in detail. In this case, a diamond-like-carbon (DLC) protection layer may be formed over the air bearing surface 28 so as to cover over the exposed end of the read/write electromagnetic transducer 23. The flying head slider 19 may take any shape or form other than the above-described one.

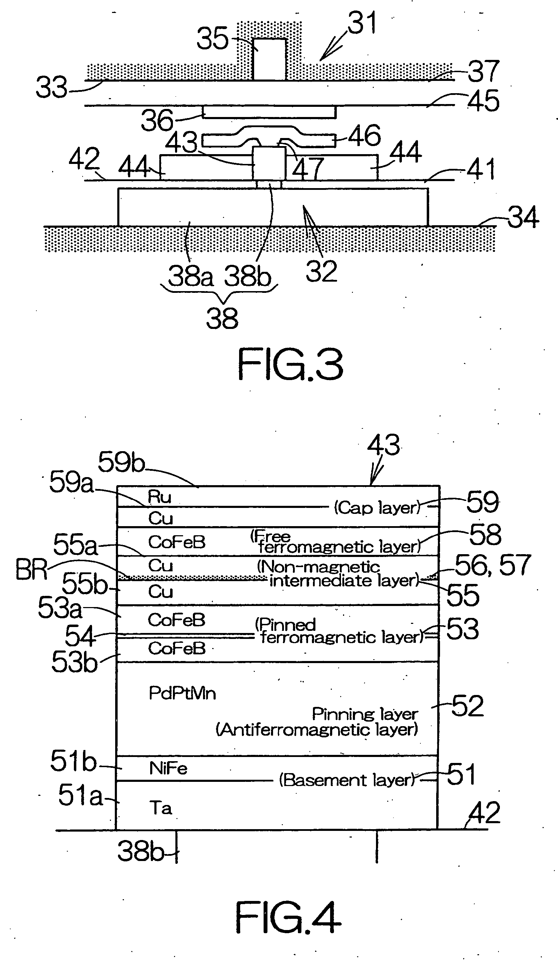

Fig. 3 illustrates an enlarged detailed view of the read/write electromagnetic transducer 23 exposed at the bottom surface 25. The read/write electromagnetic transducer 23 comprises an inductive write element or a thin film magnetic head 31 and a current-perpendicular-to-the-plane (CPP) structure electromagnetic transducer element or CPP structure magnetoresistive (MR) read element 32. The thin film magnetic head 31 is designed to write a magnetic bit data onto the magnetic recording disk 13 by utilizing a magnetic field induced in a conductive swirly coil pattern, not shown, for example. The CPP structure MR read element 32 is designed to detect a magnetic bit data by utilizing variation in the electrical resistance in response to the inversion of the magnetic polarity in a magnetic field acting from the magnetic recording disk 13. The thin film magnetic head 31 and the CPP structure MR read element 32 are interposed between an Al₂O₃ (alumina) layer 33 as an upper half layer or overcoat film and an Al₂O₃ (alumina) layer 34 as a lower half layer or undercoat film. The overcoat and undercoat films in combination establish the aforementioned head protection layer 24.

The thin film magnetic head 31 includes an upper magnetic pole layer 35 exposing the front end at the air bearing surface 28, and a lower magnetic pole layer 36 likewise exposing the front end at the air bearing surface 28. The upper and lower magnetic pole layers 35, 36 may be made of FeN, NiFe, or the like, for example. The combination of the upper and lower magnetic pole layers 35, 36 establishes the magnetic core of the thin film magnetic head 31.

A non-magnetic gap layer 37 is interposed between the upper and lower magnetic pole layers 35, 36. The non-magnetic gap layer 37 may be made of Al₂O₃ (alumina), for example. When a magnetic field is induced at the conductive swirly coil pattern, a magnetic flux is exchanged between the upper and lower magnetic pole layers 35, 36. The non-magnetic gap layer 37 allows the exchanged magnetic flux to leak out of the bottom surface 25. The thus leaked magnetic flux forms a magnetic field for recording, namely, a write gap magnetic field.

The CPP structure MR read element 32 includes a lower electrode 38 spreading over the upper surface of the alumina layer 34 as a basement insulation layer. The lower electrode 38 is designed to comprise an electrically-conductive lead layer 38a and an electrically-conductive terminal piece 38b standing on the upper surface of the lead layer 38a. The lower electrode 38 may have, not only a property of electric conductors, but also a soft magnetic property. If the lower electrode 38 is made of a soft magnetic electric conductor, such as NiFe, for example, the lower electrode 38 is also allowed to serve as a lower shield layer for the CPP structure MR read element 32.

The lower electrode 38 is embedded in an insulation layer 41 spreading over the surface of the alumina layer 34. The insulation layer 41 is designed to extend over the surface of the lead layer 38a so as to contact the side surface of the terminal piece 38b. Here, a flat surface 42 can be defined continuously over the top surface of the terminal piece 38b and the upper surface of the insulation layer 41.

An electromagnetic transducer film or magnetoresistive (MR) layered piece 43 is located on the flat surface 42 so as to extend along the air bearing surface 28 . The MR layered piece 43 is designed to extend at least across the top surface of the terminal piece 38b. In this manner, an electric connection can be established between the MR layered piece 43 and the lower electrode 38. The structure of the MR layered piece 43 will be described later in detail.

Likewise, a pair of biasing hard magnetic stripe layers, namely, domain control stripe layers 44, are located on the flat surface 42 so as to extend along the air bearing surface 28. The domain control stripe layers 44 are designed to interpose the MR layered piece 43 along the air bearing surface 28 over the flat surface 42. The domain control stripe layers 44 may be made of a metallic material such as CoPt, CoCrPt, or the like. A specific magnetization is established in the domain control stripe layers 44 along a predetermined lateral direction across the MR layered piece 43. The magnetization in the domain control stripe layers 44 in this manner serves to form a biasing magnetic field between the domain control stripe layers 44. The biasing magnetic field is designed to realize the single domain property in a free ferromagnetic layer, for example, in the MR layered piece 43.

The flat surface 42 is covered with an overlaid insulation layer 45. The overlaid insulation layer 45 is designed to hold the MR layered piece 43 and the domain control stripe layers 44 against the insulation layer 41. An upper electrode 46 is allowed to spread over the upper surface of the overlaid insulation layer 45. In the same manner as the lower electrode 38, the upper electrode 46 may have, not only a property of electric conductors, but also a soft magnetic property. If the upper electrode 46 is made of a soft magnetic electric conductor, such as NiFe, for example, the upper electrode 46 is also allowed to serve as an upper shield layer for the CPP structure MR read element 32. The space defined between the aforementioned lower shield layer or the lower electrode 38 and the upper electrode 46 determines the linear resolution of the magnetic recording or data along the recording tracks on the magnetic recording disk 13. The upper electrode 46 comprises a terminal bump 47 penetrating through the overlaid insulation layer 45 so as to contact the upper surface of the MR layered piece 43. In this manner, an electric connection can be established between the MR layered piece 43 and the upper electrode 46.

A sensing electric current can be supplied to the MR layered piece 43 through the upper and lower electrodes 46, 38 in the CPP structure MR read element 32. As is apparent from Fig. 3, the terminal piece 38b as well as the terminal bump 47 serves to reduce the path for the supplied sensing electric current in the MR layered piece 43. Moreover, the CPP structure MR read element 32 of this type is allowed to establish the path of the sensing electric current at the central area of the MR layered piece 43 remote from the contact to the domain control stripe layers 44.

Fig. 4 illustrates an MR layered piece 43 according to a first embodiment of the present invention. The MR layered piece 43 is a so-called single spin valve film of the type including a free ferromagnetic layer located above a pinned ferromagnetic layer. Specifically, the MR layered piece 43 includes a basement layer 51 spreading over the flat surface 42. The basement layer 51 comprises a Ta layer 51a extending over the flat surface 42, for example, and a NiFe layer 51b extending over the upper surface of the Ta layer 51a. A pinning layer 52 is superposed over the upper surface of the basement layer 51. The pinning layer 52 may be formed of an antiferromagnetic material such as PdPtMn.

A pinned ferromagnetic layer 53 is superposed over the upper surface of the pinning layer 52. A multilayered ferrimagnetic structure film may be employed as the pinned ferromagnetic layer 53. The pinned ferromagnetic layer 53 of the multilayered ferromagnetic structure film may include upper and lower ferromagnetic layers 53a, 53b and a Ru coupling layer 54 interposed between the upper and lower ferromagnetic layers 53a, 53b. The upper and lower ferromagnetic layers 53a, 53b may be formed of a soft magnetic alloy layer such as a CoFe layer, a CoFeB layer, or the like. The pinned ferromagnetic layer 53 may take any other structure.

A non-magnetic intermediate layer 55 is superposed over the upper surface of the pinned ferromagnetic layer 53. The non-magnetic intermediate layer 55 may be formed of upper and lower electrically-conductive layers 55a, 55b, for example. A boundary *BR* is defined between the electrically-conductive layers 55a, 55b. A magnetic metallic material 56 and an insulating material 57 are allowed to exist along the boundary *BR*. The magnetic metallic material 56 and the insulating material 57 may be mixed with each other over the boundary *BR*. The individual electrically-conductive layer 55a, 55b may be formed of a Cu layer, for example. The magnetic metallic material 56 may be formed of a soft magnetic alloy such as CoFe, CoFeB, or the like. The insulating material 57 may be formed of a metal oxide or a metal nitride generated based on the magnetic metallic material 56, for example. Otherwise, the non-magnetic intermediate layer 55 may include three or more electrically-conductive layers. In this case, the magnetic metallic material 56 and the insulating material 57 may exist over any boundaries *BR* defined between the adjacent electrically-conductive layers.

A free ferromagnetic layer 58 is superposed over the upper surface of the non-magnetic intermediate layer 55. The non-magnetic intermediate layer 55 is thus interposed between the free ferromagnetic layer 58 and the pinned ferromagnetic layer 53. The free ferromagnetic layer 58 may be formed of a soft magnetic alloy layer such as a CoFe layer, a CoFeB layer, or the like. A cap layer 59 is superposed over the upper surface of the free ferromagnetic layer 58. The cap layer 59 may comprise a Cu layer 59a extending over the surface of the free ferromagnetic layer 58, and a Ru layer 59b extending over the upper surface of the Cu layer 59a, for example.

When the CPP structure MR read element 32 is opposed to the surface of the magnetic recording disk 13 for reading a magnetic information data, the magnetization of the free ferromagnetic layer 58 is allowed to rotate in the MR layered piece 43 or spin valve film in response to the inversion of the magnetic polarity applied from the magnetic recording disk 13. The rotation of the magnetization in the free ferromagnetic layer 58 induces variation in the electrical resistance of the MR layered piece 43, namely, the spin valve film. When a sensing electric current is supplied to the MR layered piece 43 through the upper and lower electrodes 46, 38, a variation in the level of any parameter such as voltage appears, in response to the variation in the magnetoresistance, in the sensing electric current output from the upper and lower electrodes 46, 38. The variation in the level can be utilized to detect a magnetic bit data recorded on the magnetic recording disk 13.

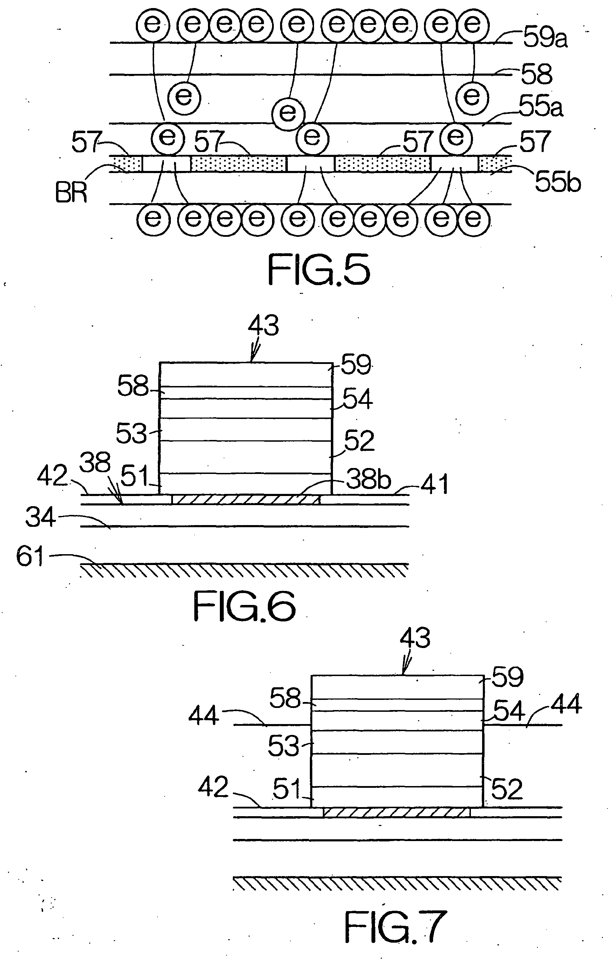

The MR layered piece 43 allows a sensing electric current to flow in the direction normal to the boundary *BR*. As shown in Fig. 5, the sensing electric current is supposed to penetrate through the magnetic metallic material 56 at the gap of the insulating material 57. The MR layered piece 43 realizes a larger variation in the electrical resistance in response to the rotation of the magnetization in the free ferromagnetic layer 58. A sensing electric current of a smaller value is still employed to obtain a sufficient variation in an electric parameter such as voltage. The CPP structure MR read element 32 embodying the present invention of the above-described type greatly contributes to a further improvement in the recording density and reduction in the electric consumption. In addition, the electrical resistance of the CPP structure MR read element 32 can be reduced to approximately one tenth of the electrical resistance of the tunnel junction magnetoresistive (TMR) element. Generation of a so-called thermal noise can thus be prevented in the CPP structure MR read element 32. Furthermore, the CPP structure MR read element 32 allows the domain control stripe layers 44 to easily establish the single domain property in the free ferromagnetic layer 58 within the MR layered piece 43.

Next, description will be made on a method of making a CPP structure MR read element 32 embodying the present invention. A wafer 61 of Al₂O₃-TiC is first prepared. The overall surface of the wafer 61 is covered with the alumina layer 34. As is apparent from Fig. 6, the lower electrode 38 is formed over the surface of the alumina layer 34. The lower electrode 38 is then embedded within the insulation layer 41 spreading over the surface of the alumina layer 34. When the insulation layer 41 is subjected to a flattening polishing treatment, for example, the terminal piece 38b of the lower electrode 38 is allowed to get exposed at the flat surface 42. In this manner, a substructure layer is formed to expose at least partly the lower electrode 38.

The MR layered piece 43 is thereafter formed on the upper surface of the substructure layer or flat surface 42. A layered material film is first formed all over the flat surface 42. The layered material film includes the layers identical to those of the MR layered piece 43. A method of forming the layered material film will be described later in detail. The MR layered piece 43 is scraped out of the layered material film. A photolithography technique may be employed to form the MR layered piece 43. The MR layered piece 43 can be formed to stand on the upper surface of the basement layer or the flat surface 42 in this manner.

Subsequently, the domain control stripe layers 44 are formed on the flat surface 42, as shown in Fig. 7. A sputtering process may be employed to form the domain control stripe layers 44, for example. A photoresist film, not shown, is first formed over the flat surface 42 in a sputtering process. The photoresist film serves to define a space or void, corresponding to the shape of the domain control stripe layers 44, adjacent the MR layered piece 43. The domain control stripe layers 44 are formed within the void. The domain control stripe layers 44 are required to interpose at least the free ferromagnetic layer 58 of the MR layered piece 43. The upper surfaces of the domain control stripe layers 44 preferably stay below the cap layer 59.

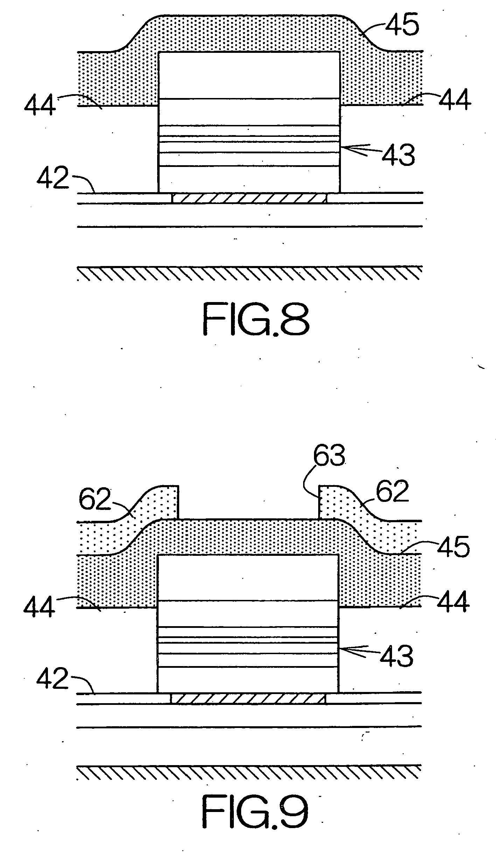

As shown in Fig. 8, the overlaid insulation layer 45 is thereafter formed all over the flat surface 42. The MR layered piece 43 and the domain control stripe layers 44 are covered with the overlaid insulation layer 45. A sputtering process may be employed to form the overlaid insulation layer 45. A target of an insulation material such as SiO₂, Al₂O₃, or the like, may be employed in the sputtering process. Thereafter, a photoresist film 62 is formed over the overlaid insulation layer 45, as shown in Fig. 9. A void 63 corresponding to the contour of the terminal bump 47 is defined in the photoresist film 62.

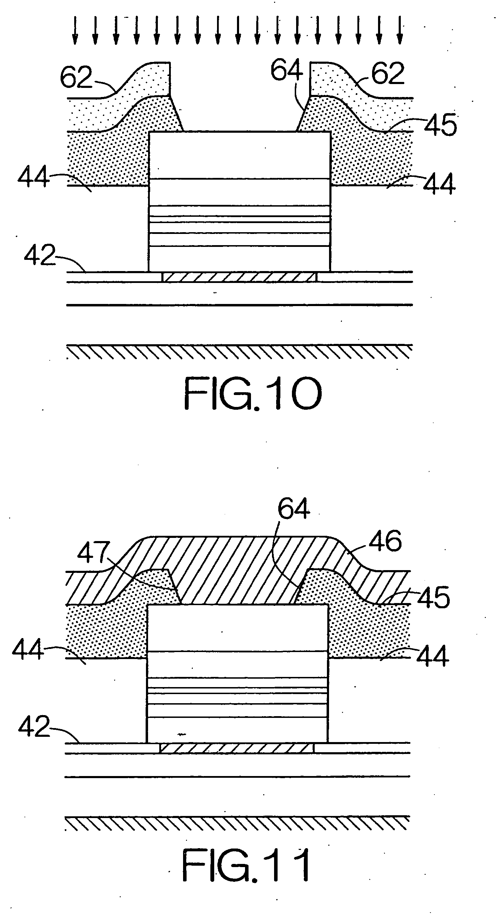

The overlaid insulation layer 45, covered with the photoresist film 62, is then subjected to a reactive ion etching (RIE) process. An etching gas of SF₆ may be employed in the RIE process. As shown in Fig. 10, the etching gas serves to remove the overlaid insulation layer 45 within the void 63. In this manner, a so-called contact hole 64 is formed in the overlaid insulation layer 45. After the contact hole 64 has been formed, the photoresist film 62 may be removed.

As shown in Fig. 11, the upper electrode 46 is then formed to extend over the overlaid insulation layer 45. The upper electrode 46 is allowed to enter the contact hole 64. In this manner, the upper electrode 46 contacts the upper surface of the MR layered piece 43, namely, the cap layer 59. The CPP structure MR read element 32 is, thus, established. As conventionally known, the thin film magnetic head 31 is formed over the established CPP structure MR read element 32.

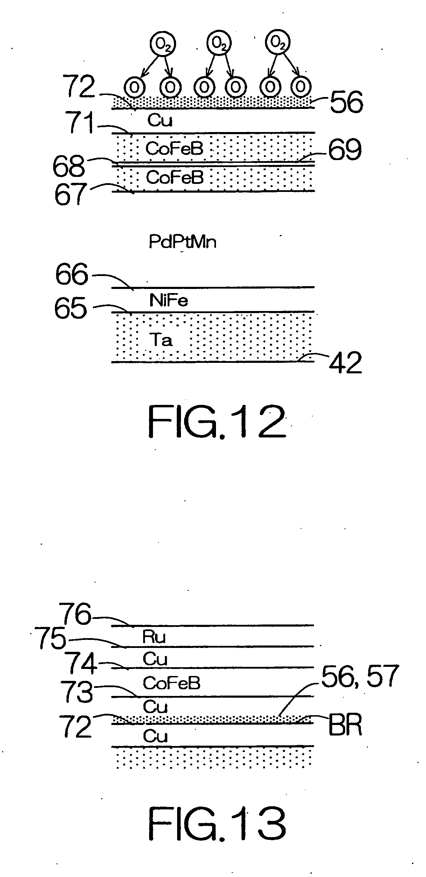

As shown in Fig. 12, the flat surface 42 is designed to receive a Ta layer 65 and a NiFe layer 66 corresponding to the basement layer 51, a PdPtMn layer 67 corresponding to the pinning layer 52, a CoFeB layer 68 as well as a Ru layer 69 and a CoFeB layer 71 corresponding to the pinned ferromagnetic layer 53, and a Cu layer 72 corresponding to the lower electrically-conductive layer 55b, in this sequence, for example, in forming the aforementioned layered material film. Sputtering may be effected within a vacuum chamber so as to form the layered material film.

After the Cu layer 72 has been formed, formation of the magnetic metallic material is conducted over the surface of the Cu layer 72 within the vacuum chamber. Sputtering may be employed, for example. A powder compact of a soft magnetic alloy, such as CoFe, CoFeB, or the like, is utilized as a target of the sputtering. The deposition or sputtering speed of the material is set at approximately 1.0nm. A continuous "complete" film is not expected over the surface of the Cu layer 72. The magnetic metal atoms are supposed to exist in a dispersed manner at a predetermined density. The magnetic metal material 56 is thus formed to disperse over the surface of the Cu layer 72.

As is apparent from Fig. 12, oxygen gas is then introduced into the chamber, for example. Oxidation reaction of the magnetic metallic material 56 is induced on the surface of the Cu layer 72. The oxidation reaction allows generation of the metal oxide, namely, the insulating material 57 out of the magnetic metallic material 56. In this manner, the insulating material 57 is formed to disperse on the surface of the Cu layer 72. Unless the magnetic metallic material 56 completely gets oxidized, the mixture of the magnetic metallic material 56 and the insulating material 57 keeps existing on the surface of the Cu layer 72. A plasma oxidation or radical oxidation may be employed in place of the aforementioned natural oxidation. Alternatively, the oxidation may be replaced with nitriding. Nitriding can be effected by introducing nitrogen gas into the chamber, for example. Nitriding allows generation of a metal nitride, namely, the insulating material 57 out of the magnetic metallic material 56.

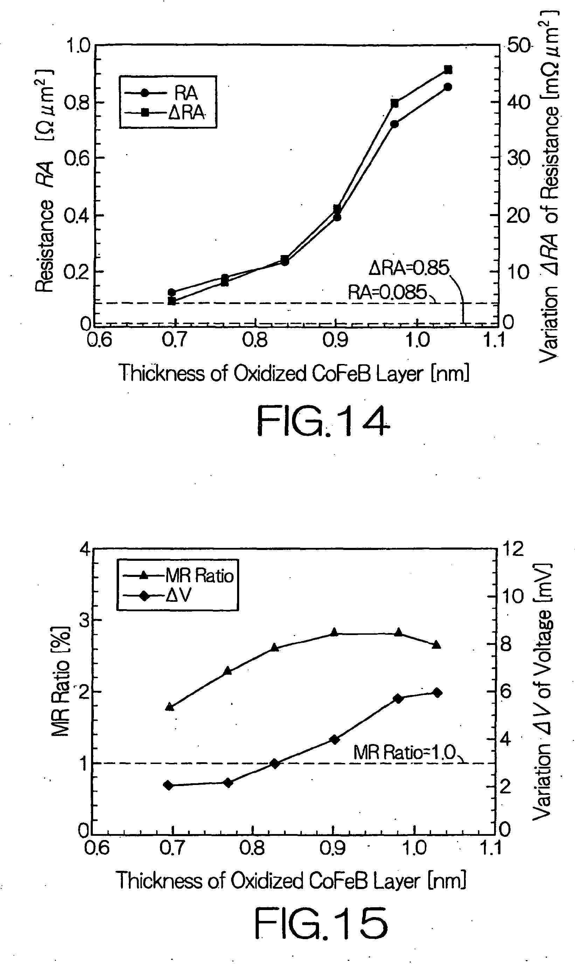

As shown in Fig. 13, another Cu layer 73 is formed to extend on the surface of the Cu layer 72. This Cu layer 73 is designed to correspond to the upper electrically-conductive layer 55a. Sputtering may be effected within the vacuum chamber. The magnetic metallic material 56 and the insulating material 57 are interposed between the Cu layers 72, 73. The boundary *BR* can be defined between the Cu layers 72, 73. A CoFeB layer 74 corresponding to the free ferromagnetic layer 58 as well as a Cu layer 75 and a Ru layer 76 both corresponding to the cap layer 59 are then formed to extend over the Cu layer 73.

The present inventors have observed the magnetoresistive characteristics of an MR layered piece 43 embodying the present invention. The present inventors have prepared specific examples of an MR layered piece 43 embodying the present invention (as described above) on wafers made of Al₂O₃-TiC for the observation. The wafers were designed to receive a Ta layer of 5.0nm thickness, a NiFe layer of 2.0nm thickness, a PdPtMn layer of 13.0nm thickness, a CoFeB layer of 3.0nm thickness, a Ru layer of 0.75nm thickness, a CoFeB layer of 4.0nm thickness, a first Cu layer of 2.0nm thickness, a CoFeB layer, a second Cu layer of 2.0nm thickness, a CoFeB layer of 3.0nm thickness, a Cu layer of 4.0nm thickness and a Ru layer of 5.0nm thickness, in this sequence. The CoFeB layer on the first Cu layer was exposed to oxygen gas within the chamber before deposition of the second Cu layer. The oxygen gas was introduced into the chamber under a pressure of 3.5[Pa]. The duration of the introduction was set at 300[sec]. Oxidation of the CoFeB layer provided the aforementioned insulating material 57 between the first and second Cu layers.

The MR layered piece 43 was thereafter subjected to a heat treatment. The MR layered piece 43 was placed within a magnetic field of 2[T] for three (3) hours at the temperature of 280 degrees Celsius. The lattice structure of the PdPtMn layer was regulated in this manner. The present inventors prepared six types of the MR layered piece 43. The thickness of the CoFeB layer to be exposed to oxygen gas was set at different values in the individual MR layered pieces 43.

Likewise, the present inventors prepared a comparative example of an MR layered piece. The comparative example was designed to exclude the CoFeB layer between the first and second Cu layers. Specifically, no metal oxide existed within the non-magnetic intermediate layer.

The magnitude *RA* and the variation Δ*RA* in the electrical resistance were measured for the individual MR layered pieces 43. The ratio of the magnetoresistance (MR ratio) was calculated based on the measured magnitude *RA* and variation Δ*RA*. The current value *Is* was calculated based on the measured magnitude *RA*. The MR layered pieces 43 were shaped into a 0.1[µm]x0.1[µm] square. The electric power consumption was set at a constant value (=550µW). The variation Δ*V* of the voltage was calculated based on the calculated current value *Is* and the variation Δ*RA* of the resistance. As shown in Figs. 14 and 15, the magnitude *RA* of 0.085Ωµm² and the variation Δ*RA* of 0.85mΩµm² were obtained in the MR layered piece of the comparative example. The MR ratio was 1.0%. The MR layered piece 43 in this embodiment of the present invention exhibited superior magnitude *RA* and variation Δ*RA*, as compared with the comparative example, over the thickness of the CoFeB layer, subjected to exposure to the oxygen gas, ranging between 0.69nm and 1.04nm as can be seen from Fig. 14. At the same time, the MR layered pieces 43 exhibited superior MR ratio and variation Δ*V* of the voltage as compared with the comparative example as can be seen from Fig. 15. In this manner, the utility of the magnetic metallic material 56 and the insulating material 57 has been verified.

The present inventors prepared other specific examples of the aforementioned MR layered piece 43 on wafers in the same manner as described above. Here, the present inventors used a CoFe alloy as the magnetic metallic material 56, subjected to exposure to oxygen gas, in place of the aforementioned CoFeB layer. The thickness of the CoFe alloy was set at 1.0nm. The CoFe alloy layer was subjected to oxygen gas within the chamber for sputtering prior to deposition of the second Cu layer in the same manner as described above. The oxygen gas was introduced into the chamber under a pressure of 3.5 [Pa]. The duration of the introduction was set at 300 [sec]. Oxidation of the CoFe alloy layer provided the aforementioned insulating material 57 between the first and second Cu layers. The present inventors prepared three types of the MR layered piece 43. The quantity of the Fe composition included in the CoFe alloy was set at different values in the individual MR layered pieces 43.

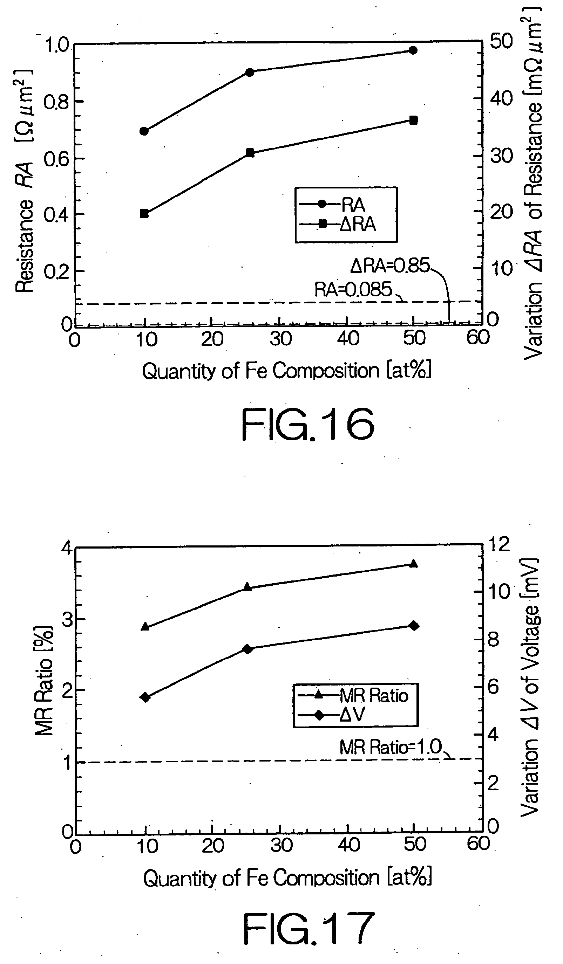

The magnitude *RA* and the variation Δ*RA* in the electrical resistance were measured for the individual MR layered pieces 43. The MR ratio was calculated based on the measured magnitude *RA* and variation Δ*RA*. The variation Δ*V* of the voltage was calculated based on the calculated current value *Is* and the variation Δ*RA* of the resistance in the same manner as described above. As shown in Figs. 16 and 17, remarkably superior magnitude *RA* and variation Δ*RA* were obtained as compared with the comparative example when the quantity of the Fe composition reached 50% within the CoFe alloy layer subjected to exposure to oxygen gas . And also, superior MR ratio and variation Δ*V* of the voltage could be obtained in the specific examples of the MR layered piece 43 as compared with the comparative example.

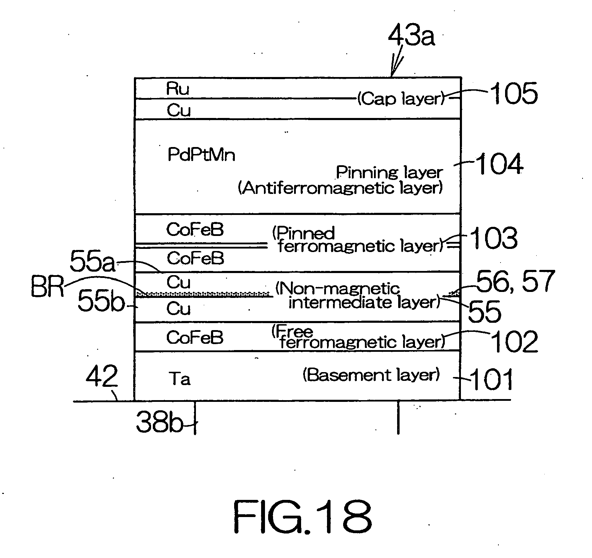

Fig. 18 illustrates a second embodiment of an MR layered piece 43a according to the present invention. The MR layered piece 43a is a so-called single spin valve film of the type including a free ferromagnetic layer located below a pinned ferromagnetic layer. Specifically, the MR layered piece 43a includes abasement layer 101 spreading over the flat surface 42. The basement layer 101 may comprise a Ta layer, for example. A free ferromagnetic layer 102 is superposed over the upper surface of the basement layer 101. The free ferromagnetic layer 102 may be made of a soft magnetic alloy layer such as a CoFe layer, a CoFeB layer, or the like. The aforementioned non-magnetic intermediate layer 55 is superposed over the upper surface of the free ferromagnetic layer 102.

A pinned ferromagnetic layer 103 is superposed over the upper surface of the non-magnetic intermediate layer 55. A multilayered ferrimagnetic structure film may be employed as the pinned ferromagnetic layer 103 in the same manner as described above. The non-magnetic intermediate layer 55 is thus interposed between the pinned ferromagnetic layer 103 and the free ferromagnetic layer 102. A pinning layer 104 as well as a cap layer 105 are sequentially superposed over the upper surface of the pinned layer 103. The pinning layer 104 may be made of an antiferromagnetic material such as PdPtMn. The cap layer 105 may be formed of a Cu layer, a Ru layer, or the like.

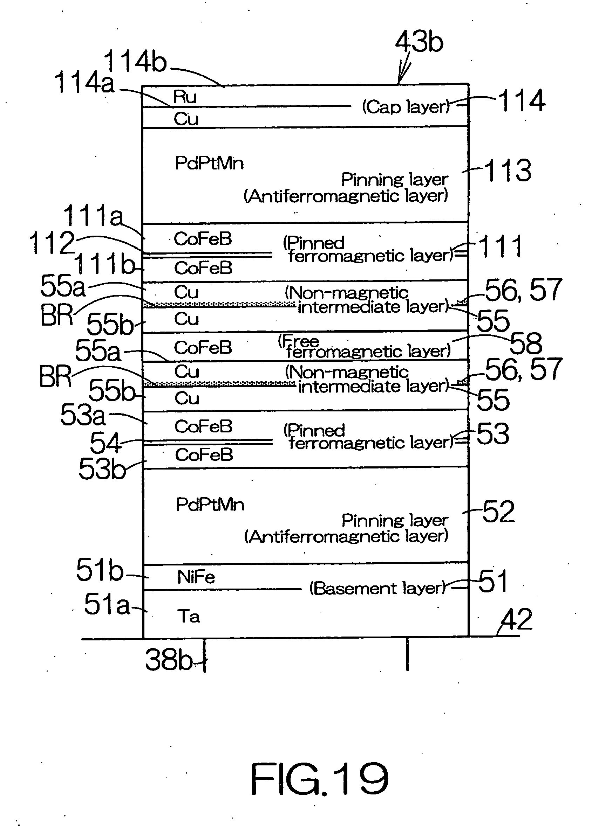

Fig. 19 illustrates a third embodiment of an MR layered piece 43b embodying the present invention. The MR layered piece 43b is a so-called dual spin valve film. Specifically, the MR layered piece 43a includes the basement layer 51, the pinning layer 52, the pinned ferromagnetic layer 53, the non-magnetic intermediate layer 55 and the free ferromagnetic layer 58, superposed over the flat surface 42 in this sequence, in the same manner as described above. The non-magnetic intermediate layer 55 is again superposed over the upper surface of the free ferromagnetic layer 58.

A pinned ferromagnetic layer 111 is superposed over the upper surface of the non-magnetic intermediate layer 55. A multilayered ferrimagnetic structure film may be employed as the pinned ferromagnetic layer 111, for example. Specifically, the pinned ferromagnetic layer 111 may include upper and lower ferromagnetic layers 111a, 111b and a Ru coupling layer 112 interposed between the upper and lower ferromagnetic layers 111a, 111b. The upper and lower ferromagnetic layers 111a, 111b may be formed of a soft magnetic alloy layer such as a CoFe layer, a CoFeB layer, or the like. The pinned ferromagnetic layer 53 may take any other structure. The non-magnetic intermediate layer 55 is thus interposed between the pinned ferromagnetic layer 111 and the free ferromagnetic layer 58.

A pinning layer 113 as well as a cap layer 114 are sequentially superposed over the upper surface of the pinned layer 111. The pinning layer 113 may be made of an antiferromagnetic material such as PdPtMn. The cap layer 114 may comprise a Cu layer 114a and a Ru layer 114b, for example.

The present inventors observed the magnetoresistive characteristics of the MR layered piece 43b. The present inventors prepared specific examples of the aforementioned MR layered piece 43b on wafers made of Al₂O₃-TiC for the observation. The wafers were designed to receive a Ta layer of 5.0nm thickness, a NiFe layer of 2.0nm thickness, a PdPtMn layer of 13.0nm thickness, a CoFeB layer of 3.0nm thickness, a Ru layer of 0.75nm thickness, a CoFeB layer of 4.0nm thickness, a first Cu layer of 2.0nm thickness, a CoFeB layer, a second Cu layer of 2.0nm thickness, a CoFeB layer of 3.0nm thickness, a third Cu layer of 2.0nm thickness, a CoFeB layer, a fourth Cu layer of 2.0nm thickness, a CoFeB layer of 4.0nm thickness, a Ru layer of 0.75nm thickness, a CoFeB layer of 5.0nm thickness, a PdPtMn layer of 13.0nm thickness, a Cu layer of 4.0nm thickness and a Ru layer of 5.0nm thickness, in this sequence. The CoFeB layers on the first and third Cu layers were exposed to oxygen gas within the chamber before deposition of the second and fourth Cu layers. The oxygen gas was introduced into the chamber under a pressure of 3.5 [Pa]. The duration of the introduction was set at 100 [sec] and 300 [sec], respectively. Oxidation of the CoFeB layer provided the aforementioned insulating material 57 between the first and second Cu layers as well as the third and fourth Cu layers. The PdPtMn layer was thereafter regulated in the same manner as described above. The present inventors have prepared lots of specific examples of the MR layered piece 43b. The thickness of the CoFeB layer to be exposed to oxygen gas was set at different values in the individual MR layered pieces 43b.

Likewise, the present inventors prepared a comparative example of an MR layered piece. The comparative example was designed to exclude the CoFeB layers between the first and second Cu layers as well as the third and fourth Cu layers. No metal oxide existed within the non-magnetic intermediate layer.

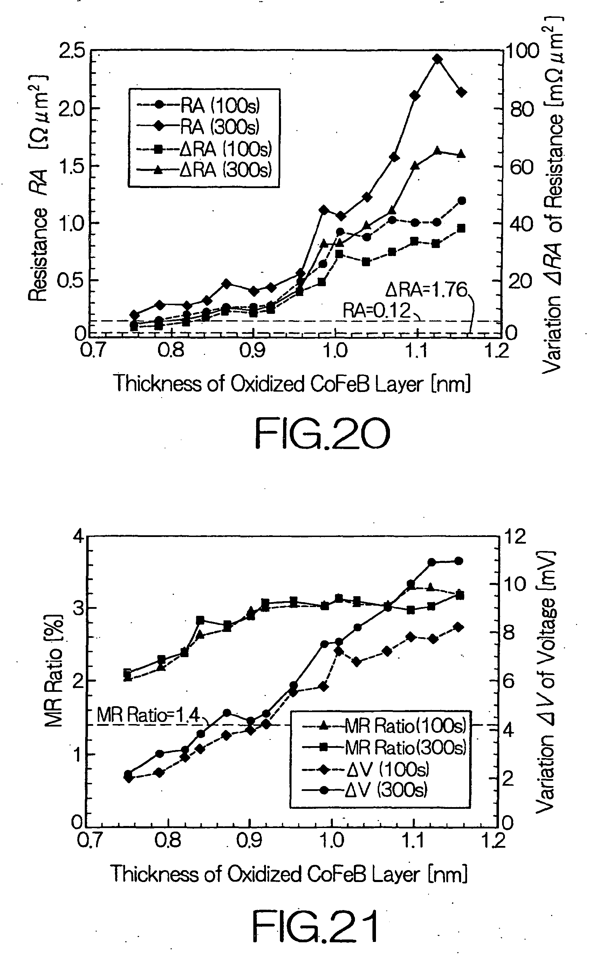

The magnitude *RA* and the variation Δ*RA* in the electrical resistance were measured for the individual MR layered pieces 43b. The MR ratio was calculated based on the measured magnitude *RA* and variation Δ*RA*. The variation Δ*V* of the voltage was calculated based on the calculated current value *Is* and the variation Δ*RA* of the resistance in the same manner as described above. As shown in Figs. 20 and 21, the magnitude *RA* of 0.12Ωµm² and the variation Δ*RA* of 1.76mΩµm² were obtained in the MR layered piece of the comparative example. The MR ratio was 1.4%. The examples of the MR layered piece 43b exhibited superior magnitude *RA* and variation Δ*RA*, as compared with the comparative example, over the thickness of the CoFeB layers, subjected to exposure to the oxygen gas, ranging between 0.75nm and 1.15nm. At the same time, the examples of the MR layered piece 43b exhibited superior MR ratio and variation Δ*V* of the voltage as compared with the comparative example. In this manner, the utility of the magnetic metallic material 56 and the insulating material 57 has been verified.

It should be noted that the aforementioned non-magnetic intermediate layer 55 of an MR layered piece 43, 43a, 43b embodying the present invention may contact the pinned ferromagnetic layer 53, 103, 111 as well as the free ferromagnetic layer 58, 102 at the boundary *BR.* In other words, the aforementioned magnetic metallic material 56 and the insulating layer 57 may be interposed between the pinned ferromagnetic layer 53, 103, 111 and the non-magnetic intermediate layer 55 as well as between the free ferromagnetic layer 58, 102 and the non-magnetic intermediate layer 55.

## Claims

1. A current-perpendicular-to-the-plane structure magnetoresistive element (43) comprising:
a free magnetic layer (58);
a pinned magnetic layer (53); and
a non-magnetic intermediate layer (55) interposed between the free magnetic layer (58) and pinned magnetic layer (53);
**characterized in that**:
the non-magnetic intermediate layer (55) is made of an electrically-conductive material and has a surface defining a boundary (BR) of the non-magnetic intermediate layer (55); and
insulating material (57) exists on the boundary (BR) in a dispersed manner.

2. The current-perpendicular-to-the-plane structure magnetoresistive element according to claim 1, wherein said non-magnetic intermediate layer (55) includes a plurality of electrically-conductive layers (55a, 55b), the boundary (BR) being defined between at least a pair of the electrically-conductive layers (55a, 55b).

3. The current-perpendicular-to-the-plane structure magnetoresistive element according to claim 1 or 2, wherein the non-magnetic intermediate layer (55) has a surface in contact with the free magnetic layer (58) or the pinned magnetic layer (53).

4. The current-perpendicular-to-the-plane structure magnetoresistive element according to claim 1, 2, or 3, wherein said insulating material (57) is a metal oxide or a metal nitride.

5. The current-perpendicular-to-the-plane structure magnetoresistive element according to claim 4, wherein said insulating material (57) includes magnetic metal atoms.

6. The current-perpendicular-to-the-plane structure magnetoresistive element according to claim 5, wherein said magnetic metal atoms are any of Fe, Co and Ni.

7. The current-perpendicular-to-the-plane structure magnetoresistive element according to claim 1, 2 or 3, wherein said insulating material (57) is an oxide of CoFe alloy.

8. The current-perpendicular-to-the-plane structure magnetoresistive element according to any preceding claim, further comprising a metallic material (56) dispersedly existing on the boundary (BR) along with the insulating material (57).

9. The current-perpendicular-to-the-plane structure magnetoresistive element according to claim 8, wherein said metallic material (56) is magnetic.

10. The current-perpendicular-to-the-plane structure magnetoresistive element according to claim 8 or 9, wherein said metallic material (56) includes any of Fe, Co and Ni.

11. The current-perpendicular-to-the-plane structure magnetoresistive element according to claim 8 or 9, wherein said metallic material (56) is a soft magnetic alloy.

12. The current-perpendicular-to-the-plane structure magnetoresistive element according to claim 8 or 9, wherein said metallic material (56) is CoFe or CoFeB.

## Patentansprüche

1. Ein magneto-resistives Strom-senkrecht-zu-der-Ebene Strukturelement (43), das enthält:
eine freie Magnetschicht (58);
eine Pinned-Magnetschicht (53); und
eine nicht-magnetische Zwischenschicht (55), die zwischen der freien Magnetschicht (58) und der Pinned-Magnetschicht (53) angeordnet ist;
**dadurch gekennzeichnet, dass**:
die nicht-magnetische Zwischenschicht (55) aus einem elektrisch leitenden Material gebildet ist und eine Oberfläche aufweist, die eine Grenze (BR) der nichtmagnetischen Zwischenschicht (55) definiert; und
Isolationsmaterial (57) auf der Grenze (BR) in einer dispergierten Weise existiert.

2. Das magneto-resistive Strom-senkrecht-zu-der-Ebene Strukturelement nach Anspruch 1, wobei die nicht-magnetische Zwischenschicht (55) eine Mehrzahl an elektrisch leitenden Schichten (55a, 55b) einschließt, die Grenze (BR) definiert ist zwischen wenigstens einem Paar der elektrisch leitenden Schichten (55a, 55b).

3. Das magneto-resistive Strom-senkrecht-zu-der-Ebene Strukturelement nach Anspruch 1 oder 2, wobei die nicht-magnetische Zwischenschicht (55) eine Oberfläche aufweist, die sich in Kontakt befindet mit der freien Magnetschicht (58) oder der Pinned-Magnetschicht (53).

4. Das magneto-resistive Strom-senkrecht-zu-der-Ebene Strukturelement nach Anspruch 1, 2 oder 3, wobei das Isolationsmaterial (57) ein Metalloxid oder ein Metallnitrid ist.

5. Das magneto-resistive Strom-senkrecht-zu-der-Ebene Strukturelement nach Anspruch 4, wobei das Isolationsmaterial (57) magnetische Metallatome einschließt.

6. Das magneto-resistive Strom-senkrecht-zu-der-Ebene Strukturelement nach Anspruch 5, wobei die magnetischen Metallatome irgendwelche aus Fe, Co und Ni sind.

7. Das magneto-resistive Strom-senkrecht-zu-der-Ebene Strukturelement nach Anspruch 1, 2 oder 3, wobei das Isolationsmaterial (57) ein Oxid einer CoFe-Legierung ist.

8. Das magneto-resistive Strom-senkrecht-zu-der-Ebene Strukturelement nach einem der vorhergehenden Ansprüche, weiter enthaltend ein metallisches Material (56), das dispers auf der Grenze (BR) zusammen mit dem Isolationsmaterial (57) existiert.

9. Das magneto-resistive Strom-senkrecht-zu-der-Ebene Strukturelement nach Anspruch 8, wobei das metallische Material (56) magnetisch ist.

10. Das magneto-resistive Strom-senkrecht-zu-der-Ebene Strukturelement nach Anspruch 8 oder 9, wobei das metallische Material (56) irgendeines aus Fe, Co und Ni einschließt.

11. Das magneto-resistive Strom-senkrecht-zu-der-Ebene Strukturelement nach Anspruch 8 oder 9, wobei das metallische Material (56) eine weichmagnetische Legierung ist.

12. Das magneto-resistive Strom-senkrecht-zu-der-Ebene Strukturelement nach Anspruch 8 oder 9, wobei das metallische Material (56) CoFe oder CoFeB ist.

## Revendications

1. Elément magnétorésistif à structure de type courant perpendiculaire au plan (43) comprenant:
une couche magnétique libre (58) ;
une couche magnétique ancrée (53); et
une couche intermédiaire non-magnétique (55) intercalée entre la couche magnétique libre (58) et la couche magnétique ancrée (53) ;
**caractérisé en ce que** :
la couche intermédiaire non-magnétique (55) est fabriquée à partir d'un matériau électriquement conducteur et a une surface qui définit une frontière (BR) de la couche intermédiaire non-magnétique (55) ; et
un matériau isolant (57) existe sur la frontière (BR) d'une manière dispersée.

2. Elément magnétorésistif à structure de type courant perpendiculaire au plan selon la revendication 1, dans lequel ladite couche intermédiaire non-magnétique (55) comprend une pluralité de couches électriquement conductrices (55a, 55b), la frontière (BR) étant définie entre au moins une paire des couches électriquement conductrices (55a, 55b).

3. Elément magnétorésistif à structure de type courant perpendiculaire au plan selon la revendication 1 ou 2, dans lequel la couche intermédiaire non-magnétique (55) a une surface en contact avec la couche magnétique libre (58) ou la couche magnétique ancrée (53).

4. Elément magnétorésistif à structure de type courant perpendiculaire au plan selon la revendication 1, 2 ou 3, dans lequel ledit matériau isolant (57) est un oxyde métallique ou un nitrure métallique.

5. Elément magnétorésistif à structure de type courant perpendiculaire au plan selon la revendication 4, dans lequel ledit matériau isolant (57) comprend des atomes métalliques magnétiques.

6. Elément magnétorésistif à structure de type courant perpendiculaire au plan selon la revendication 5, dans lequel lesdits atomes métalliques magnétiques sont l'un quelconque parmi le Fe, le Co et le Ni.

7. Elément magnétorésistif à structure de type courant perpendiculaire au plan selon la revendication 1, 2 ou 3, dans lequel ledit matériau isolant (57) est un oxyde d'alliage CoFe.

8. Elément magnétorésistif à structure de type courant perpendiculaire au plan selon l'une quelconque des revendications précédentes, comprenant en outre un matériau métallique (56) existant de manière dispersée sur la frontière (BR) avec le matériau isolant (57).

9. Elément magnétorésistif à structure de type courant perpendiculaire au plan selon la revendication 8, dans lequel ledit matériau métallique (56) est magnétique.

10. Elément magnétorésistif à structure de type courant perpendiculaire au plan selon la revendication 8 ou 9, dans lequel ledit matériau métallique (56) comprend l'un quelconque parmi le Fe, le Co et le Ni.

11. Elément magnétorésistif à structure de type courant perpendiculaire au plan selon la revendication 8 ou 9, dans lequel ledit matériau métallique (56) est un alliage magnétique doux.

12. Elément magnétorésistif à structure de type courant perpendiculaire au plan selon la revendication 8 ou 9, dans lequel ledit matériau métallique (56) est un alliage CoFe ou CoFeB.
